# EUROPEAN PATENT SPECIFICATION

(11) **EP 1 467 564 B1**
(45) Date of publication and mention of the grant of the patent: **17.10.2012**
(21) Application number: 04008534.2
(22) Date of filing: 08.04.2004
(51) Int. Cl.: H04N 7/14

(54) **Videophone with screen display setting method**
Bildtelefon mit Bildschirmeinstellungsmethode
Visiophone avec méthode de programmation de l'écran

(30) Priority: 10.04.2003 JP 2003106812
(43) Date of publication of application: 13.10.2004
(73) Proprietor: NEC Corporation, Minato-ku Tokyo 108-8001 (JP)
(72) Inventor: Hasegawa, Yuka, Minato-ku, Tokyo (JP)
(74) Representative: Glawe, Delfs, Moll

(56) References cited:
- US-A- 5 473 366
- US-B1- 6 515 695

## Description

### BACKGROUND OF THE INVENTION

### Field of the Invention

The present invention relates to a videophone terminal, a videophone system, and a screen display setting method therefor in which by disposing an image recognizing unit such as a camera, an image can be communicated during a call using voice and sound.

### Description of the Prior Art

Heretofore, video telephone systems or videophone systems have been used to make a call between videophone terminals as video telephone sets by communicating an image as well as voice and sound.

In the conventional videophone system, the video telephone sets communicating each other shoot images by respective image recognizing units such as cameras and communicate the obtained images with each other such that the images are displayed on the respective video telephone sets.

Japanese Patent Laid-Open Ser. No. 2002-125208 (patent article 1) describes a videophone system in which a unit conducting communication as a video telephone set receives images stored in a server on a network from a communicating unit. At reception of the call from the communicating unit, the user of the unit having received the call selects an image to send the selected image to the communicating unit having issued the call.

Japanese Patent Laid-Open Ser. No. 10-98702 (patent article 2) describes a video telephone set in which a state indicating whether or not an image shot by the video telephone set has been set to the side of a communicating party is displayed in a layout in which the state can be visually recognized. This resultantly prevents an event in which an image not desired to be sent to the communicating party is sent thereto.

Japanese Patent Laid-Open Ser. No. 2002-158981 (patent article 3) filed by the present applicant describes a telephone set including a mobile picture decoder function and a still picture encoder/decoder function. When making a call with a communicating party, information of an image can be obtained therefrom without using any particular protocol between the telephone set and the communicating party.

However, in the conventional videophone system, when a user of the system in, for example, a private living space receives a call from a section manager or a customer and the user does not desire to send his or her real-time image to the communicating terminal, it is only possible for the user to set his own terminal to a still picture transmitting mode or to activate an image off function at reception of the call.

According to Japanese Patent Laid-Open Ser. No. 2002-125208, to select an image to be sent to the communicating device from which a call has been received, it is necessary for the user to manually select the image at reception of the call. Therefore, until the user selects the image at reception of the telephone call, any screen image cannot be displayed. Additionally, the user is required to select an image each time a call is received.

According to Japanese Patent Laid-Open Ser. Nos. 10-98702 and 2002-158981, although the objects thereof are respectively achieved, selection of an image to be sent to a communicating terminal has not been considered.

A videophone terminal according to the preamble of claim 1 is disclosed in US 6 515 695 B1.

### SUMMARY OF THE INVENTION

It is therefore an object of the present invention, which has been devised under the circumstance described above, to provide a videophone terminal, a videophone system, and a screen display setting method therefor in which at reception of a call as a video telephone, an image and voice and sound to be sent to a communicating party during the call is automatically selected depending on the communicating party having issued the call.

Another object of the present invention is to provide a videophone terminal, a videophone system, and a screen display setting method therefor in which even when a reply is transmitted at reception of a call as a telephone having a telephone answering function, a reply method is automatically selected depending on a communicating party having issued the call.

The objects described above can be achieved according to aspects of the present invention as follows.

In accordance with the present invention, there is provided a videophone terminal according to claim 1.

In the videophone terminal, the telephone book table relates a telephone number of a communicating terminal to a reply method to send a reply as an answering telephone and the control means makes, at reception of a call when an answering reply mode to send a reply as an answering telephone is set in advance, a search through the telephone book table and transmits, when the telephone number of the communicating terminal of the call is related to a reply method as an answering telephone, an image and voice and sound to the communicating terminal according to the reply method.

In the videophone terminal, the reply method includes a reply using a substitute image expressing a feature of a movement in an image shot by the imaging means as a movement of a character beforehand set and the control means includes a substitute image display control section for converting the image shot by the imaging means into the substitute image.

In the videophone terminal, the reply using the substitute image includes a reply using voice and sound corresponding to the substitute image and the substitute image display control section converts voice and sound from the microphone into voice and sound corresponding to the substitute image.

In the videophone terminal, the communicating means includes a function to establish connection to a network and data is obtained for the character via the network from the communicating means and is stored in the storage means.

In the videophone terminal, the reply method includes a reply using an image shot by the imaging means and a reply using a still picture. The control means includes camera image display control section for displaying the image shot by the imaging means and a still picture display control section for displaying a still picture using an image stored in the storage means.

In accordance with the present invention, there is provided a screen display setting method according to claim 8.

The screen display setting method further includes an answering reply setting step of relating in a telephone book table a telephone number of a communicating terminal to a reply method of sending a reply as an answering telephone to the communicating terminal according to an input from an input means and an answering reply step of conducting control, at reception of a call from a communicating terminal in a state in which the videophone terminal is beforehand set to reply as an answering telephone, to convert an image and voice and sound to be sent from the videophone terminal to the communicating terminal into data according to a reply method as an answering telephone related to a telephone number of the communicating terminal in the telephone book table.

In the screen display setting method, the reply method includes a reply using a substitute image expressing a feature of a movement in an image shot by the imaging means as a movement of a character beforehand set.

In the screen display setting method, the reply using the substitute image includes a reply using voice and sound corresponding to the substitute image.

In the screen display setting method, the communicating means includes a function to establish connection to a network, the method further comprising a character obtaining step of obtaining data for the character via the network from the communicating means and storing the data in storage means. The character obtaining step is disposed before the reply setting step and the answering reply setting step.

In accordance with the present invention, there is provided a videophone system including a plurality of videophone terminals as mentioned above.

In accordance with the present invention, there is provided a screen display setting method as mentioned above for use with a videophone system including a plurality of videophone terminals

### BRIEF DESCRIPTION OF THE DRAWINGS

The objects and aspects of the present invention will become more apparent from the consideration of the following detailed description taken in conjunction with the accompanying drawings in which:
Fig. 1 is a schematic diagram showing an outline of a configuration of a first embodiment of a videophone system in accordance with the present invention;

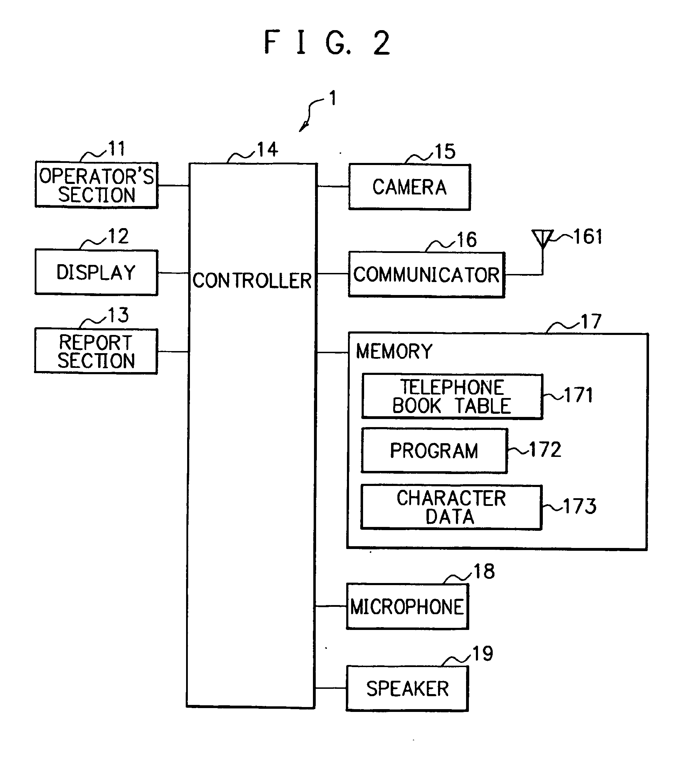

FIG. 2 is a block diagram showing a configuration of a portable telephone 1 of the videophone system;
FIG. 3 is a table showing an example of a layout of a telephone book table 171;
FIG. 4 is a block diagram showing a configuration of a portable telephone 1 in a memory space for program processing;
FIG. 5 is a schematic diagram showing a screen display example and an example of character data obtained during a call by a video telephone using a substitute image as a display screen image;
FIG. 6 is a flowchart showing a procedure of processing when a call is made using a video telephone set by displaying a character as a substitute image;
FIG. 7 is a flowchart showing a processing procedure when a substitute image is registered to a telephone directory table 171 in a reply method at reception of a call;
FIG. 8 is a flowchart showing a procedure of processing when a call is received;
FIG. 9 is a block diagram showing a configuration of a portable telephone 5 in a second embodiment of the videophone system in accordance with the present invention;
FIG. 10 is a table showing an example of a layout of a telephone book table 571;
FIG. 11 is a flowchart showing a processing procedure to set an answer in an answering telephone; and
FIG. 12 is a flowchart showing a procedure of processing to send a reply as an answering telephone at reception of a call from a communicating terminal.

### DESCRIPTION OF THE EMBODIMENTS

Referring now to the accompanying drawings, description will be given in detail of a videophone terminal, a videophone system, and a screen display setting method therefor in accordance with the present invention.

First, description will be given of an embodiment of a videophone system in which a videophone terminal is applied to a portable telephone in accordance with the present invention.

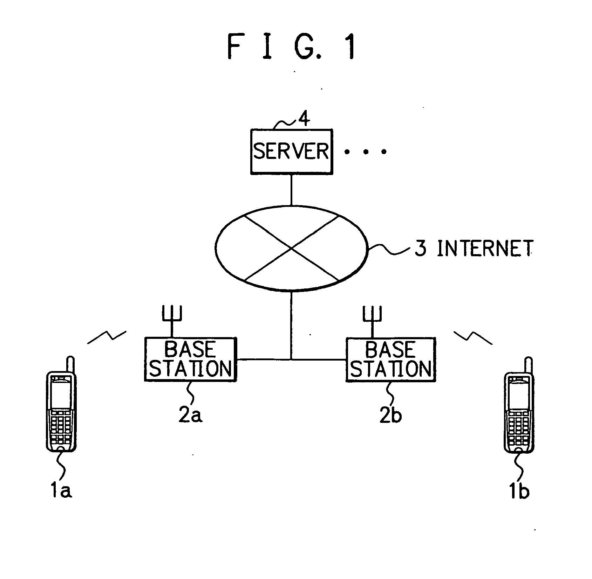

As can be seen from FIG. 1, a first embodiment of a videophone system of the present invention includes a plurality of portable telephones 1 (1a, 1b) connected to each other via base stations 2 (2a, 2b) for wireless communication to conduct telephone calls. The base stations 2 are coupled via the Internet 3 with a server 4.

The portable telephone 1 includes a video telephone function to make a call with voice and sound as well as an image.

For example when the telephone 1a issues a call, wireless communication is established to the base station 2a within a range of distance for the telephone 1a to conduct a telephone call to the station 2a. The base station 2a sets wired or wireless communication to the base station 2b within a range of distance for the telephone 1b, which is a communicating terminal of the telephone 1a, to conduct wireless communication with the base station 2b. The station 2b establishes wireless communication to the telephone 1b. After the communication is set as above, a telephone call can be made by a videophone function between the portable telephones 1a and 1b using sound and voice and an image.

The telephone 1 includes a function to access the server 4 via the base station 2 and the Internet 3 to obtain contents stored in the server 4.

The portable telephone 1 includes an operator's section (input unit) 11 to receive a request issued from the user to the telephone 1, a display 12 to display pertinent information, a report section 13 to notify information using a sound volume and/or vibration, a controller 14 to control operation of each constituent component of the telephone 1, a camera 15 to obtain a video image, a communicator 16 to conduct wireless communication, a memory 17 to store programs and setting items necessary for operation of the terminal 1, a microphone 18 to obtain voice and sound, and a speaker 19 to reproduce voice and sound received from a communicating terminal.

The operator's section 11 includes, for example, input buttons and dials. The display 12 includes, for example, a liquid-crystal display or an electroluminescence display. The report section 13 includes, for example, a speaker and a vibrator. The controller 14 includes, for example, a central processing unit (CPU) and a microcomputer.

The communicator or transceiver 16 is linked with an antenna 161 for wireless communication.

The memory 17 stores a telephone book table 171, a program 172 to implement various functions of the portable telephone 1 in accordance with the present invention, and character data 173 such as character images and voice and sound data.

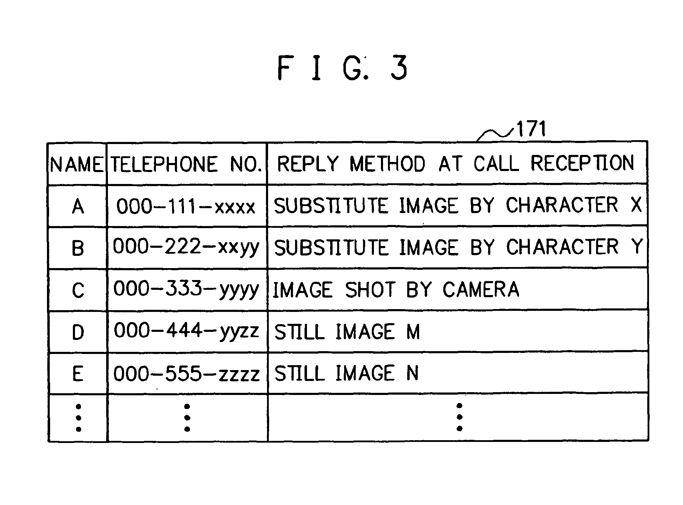

The telephone directory table 171 includes, as shown in FIG. 3, a telephone number, a name identifying a user of a portable telephone assigned with the telephone number, and a screen display method used to send a reply when a call is received from the portable telephone having the telephone number as a communicating terminal. These items are related to each other in the table 171. It is also possible to relate a mail address, not shown, to the telephone number.

The user may freely define the name identifying the user in the table 171. The name of user may be a real name or a nickname in order to specify the user.

The user may also be specified by various characters; for example, a character obtained via the Internet 3 from the server 4 or a default item or value of a character stored in advance.

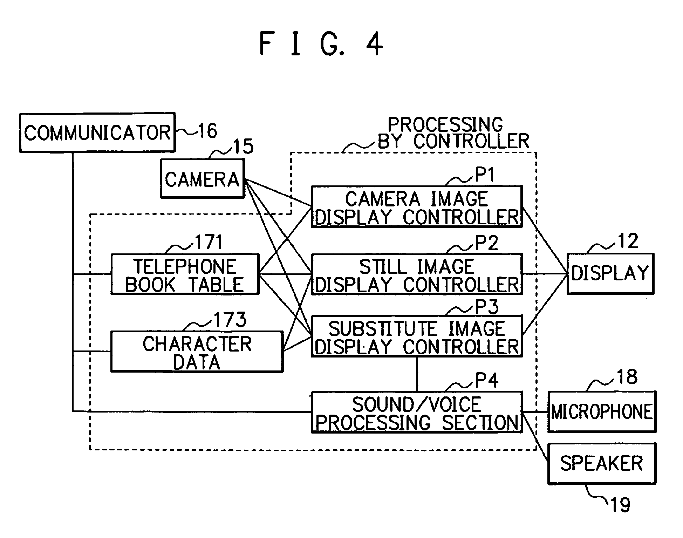

FIG. 4 shows an outline of program processing of the portable telephone 1. The outline of the processing of the controller 14 is shown as a configuration of constituent components in a memory space in a section encircled by dotted lines.

As can be seen from FIG. 4, the controller 14 of the telephone 1 executes the program 172 to implement a camera image display controller P1, a still image display controller P2, a substitute image display controller P3, and a voice and sound processing section P4.

The camera image display controller P1 receives an image produced or shot by the camera 15 and displays the image on the display 12.

The still image display controller P2 reads a sill picture from the memory 17 to display the picture on the display 12. The still picture includes a picture obtained by the camera 15, an image, not shown, obtained by the communicator 16 via the Internet 3 from the server 4 and stored in the memory 17 in advance, a still picture associated with the character data 173, and an image stored as a default item.

The substitute image display controller P3 displays a feature of motion such as an expression of a human face in the image shot by the camera 15, at the timing synchronized with motion of a character set beforehand to produce a moving picture on the display 12. The controller P3 also converts voice of the user of the terminal 1 (own terminal), which is inputted from the speaker 19, into the voice corresponding to the character. The controller P3 may be implemented by a dedicated application stored in the telephone 1. The technique to synchronize the user's movement in the image from the camera with the displayed character is well known and hence the description thereof will be avoided.

The voice and sound processing section P4 controls a call with voice and sound through a microphone and a speaker.

Having received a call, the controller 14 makes a search for each of the controllers P1 to P3 through the telephone book table 171 using a telephone number of a communicating terminal from which the call is received. When the table 171 contains the telephone number, the controller 14 accesses an appropriate one of the controllers P1 to P3 according to "the reply method at reception of call" related to the telephone number.

As a result, the display controller accessed by the controller 14 displays an image on the display 12 and produces voice and sound using the microphone 18 and the speaker 19 for the user to make a call using voice and sound.

The portable telephone (videophone terminal) of the embodiment is configured as described above. According to one aspect of the telephone, by beforehand setting a link of an image, which is displayed during a call to the telephone book table 171 before a call is made, a desired video image can be automatically selected to make a reply during the call.

By using as the image displayed during a call not only a real picture shot by the camera 15 but also a substitute image (an image on the terminal produced by synchronizing the movement of a user's image from the camera with that of a character), the videophone terminal can be advantageously used for various scenes.

Next, description will be given of operation of a videophone system in the embodiment.

Description will first be given of an operation to set the substitute image described above and a call through a video telephone using the substitute image as a display screen image.

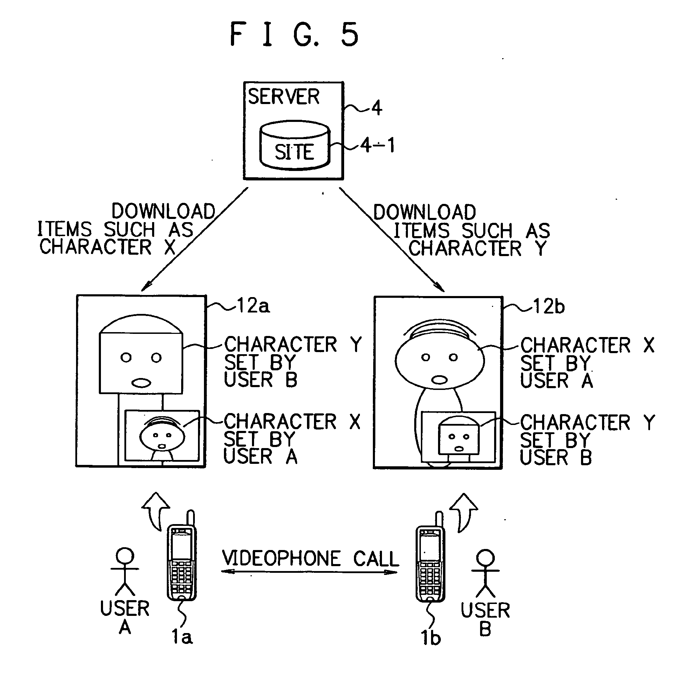

During a videophone call using the substitute image, the user's image created by the camera is not displayed, but a substitute image specified by the user is displayed on the associated telephone as shown in FIG. 5.

A display 12a of the portable telephone 1a of the user A displays a small image, i.e., a substitute image of character X set by the user A on a corner. The image is displayed as an image of the own terminal. Also, the display 12a displays a larger image, i.e., a substitute image of character Y set by the user B, the image being displayed as an image of the communicating terminal. Similarly, a display 12b of the portable telephone 1b of the user B displays a substitute image of character Y set by the user B on a corner. The image is displayed as an image of the own terminal. The display 12b also displays a larger image, i.e., a substitute image of character X set by the user A. The image is displayed as an image of the communicating, terminal.

Although the telephone 1 stores in its memory several default items for the character as the substitute image, the number of types of characters can be increased by downloading desired characters via a network from a general site such as the server 4.

It is assumed in the example of FIG. 5 that the character X is downloaded from the site of the server 4 into the telephone 1a of the user A and the character Y is downloaded from the site of the server 4 into the telephone 1b of the user B.

Description will be given, from a standpoint of the telephone 1a of the user A, a procedure of processing to make a videophone call by displaying the characters as substitute images.

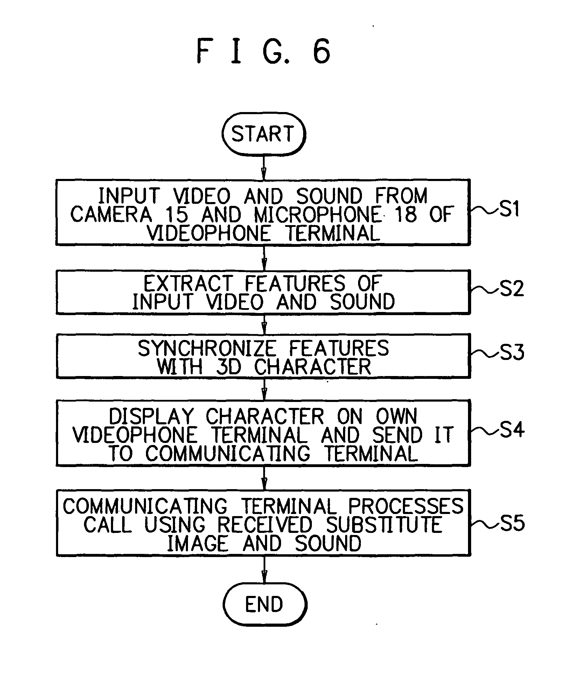

When the telephone 1a conducts a call with a communicating terminal through reception/transmission of a call, movement of a face and a body of the user A is fed from the camera 15 and/or microphone 18 of the own telephone 1a (step S1). The controller 14 then extracts features of the movement (step S2) as shown in FIG. 6. The substitute image display controller P3, i.e., a dedicated application in the videophone terminal executes processing to synchronize in a real-time fashion the features of the movement with movement and voice of the character X beforehand set to the system (step S3). Through the operation, the features of the movement of the face and the body of the user A are expressed by the movement of the character as the substitute image.

The controller 14 displays the substitute image, converted through the processing, on the display 12 as a video image of the own terminal in a smaller size as shown in FIG. 5. The communicating section 16 of the controller 14 sends the substitute image to the communicating terminal, i.e., the portable telephone 1b (step S4). When the substitute image is received, the telephone 1b executes processing of a videophone call using the substitute image, i.e., the character X and voice and sound (step S5).

To automatically use a character as a substitute image at reception of a call, it is necessary to set a reply method, the way of replying, at call reception for each communicating party (i.e., each possessor of each communicating terminal). For a reply method at reception of call, it is necessary to prepare, for example, an image to be transmitted to the communicating terminal during a videophone call using a video telephone set. Therefore, the operation above is possible only if such items are beforehand registered by the user to the telephone directory table 171.

The table 171 can store information items such as a name, a telephone number, and a mail address as well as a reply method at call reception related to the three items above.

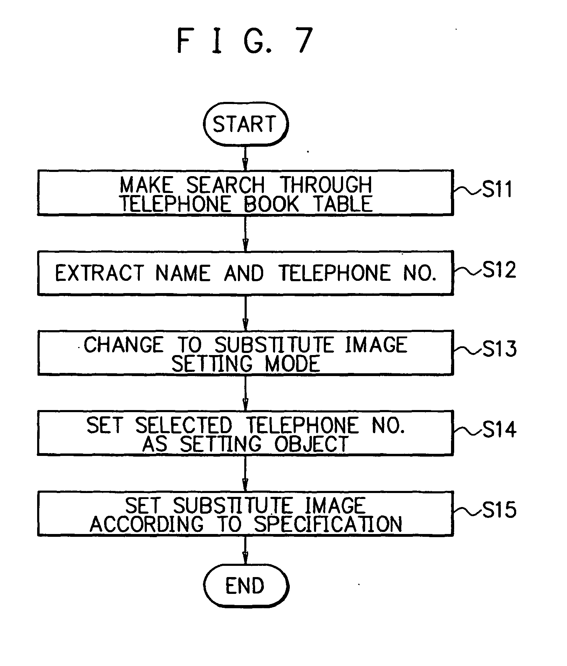

At registration of a reply method at call reception to the telephone book table 171, the controller 14 makes a search through the table 171 (step S11) to extract a name and a telephone number beforehand registered (step S12) as shown in FIG. 7. The controller 14 sets the operation mode to a substitute image setting mode in this state (step S13) and assigns the telephone number as the setting object (step S14). According to information items specified by the user for the telephone number, the controller 14 sets a condition that a substitute image is used in an operation to send a reply to a call received from the communicating terminal having the telephone number. The controller 14 then sets a character for the substitute image (step S15).

As a result of the registration to the telephone book table 171, an appropriate reply method can be automatically selected at reception of a call with notification of an issuing party number from a terminal whose telephone number has been registered to the table 171.

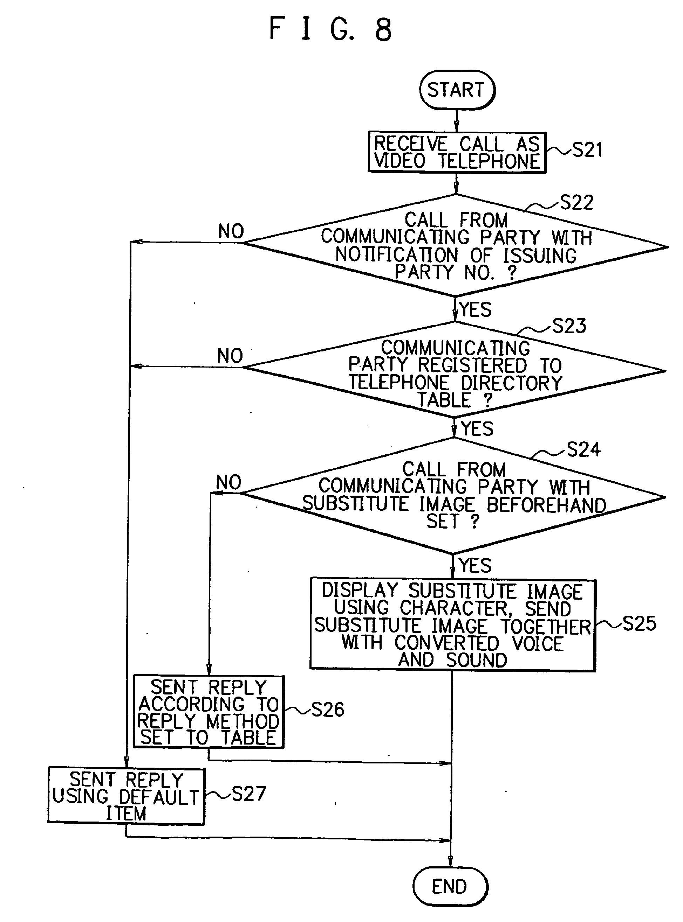

Referring now to FIG. 8, description will be given of operation at reception of a call.

When a call is received as a video telephone set (step S21) from a communicating party with notification of an issuing party number (step S22), the controller 14 makes a retrieval through the telephone directory table 171 using the number to determine whether or not the table 171 contains a telephone number of the communicating terminal associated with the issuing party number (step S23). If the table 171 contains the telephone number, the controller 14 displays a name related to the telephone number on the display 12 and sends an image and voice and sound to the communicating terminal according to the reply method at call reception.

In the operation, if a substitute image for a call is beforehand set for the reply method (step S24), the controller 14 uses the substitute image display controller P3 to display on the display 12a a substitute image using the character data 173 in the memory 17, the image being displayed as an image of the own terminal. The controller 14 also sends the substitute image and voice and sound after conversion to the communicating terminal to thereby execute call processing as a video telephone set (step S25).

In step S24, when an image shot by a camera is set for the reply method at call reception, the controller 14 uses the camera image display controller P1 to display an image created by the camera 15 on the display 12a. The controller 14 then sends the image and voice and sound from the microphone 18 to the communicating terminal, i.e., the portable telephone 1b. The controller 14 sets the system to a call state of a video telephone using an image shot by a camera (step S26).

When a still picture is set for the reply method at call reception, the controller 14 uses the still picture display controller P2 to display a still picture set to the table 171 on the display 12a. The controller 14 then sends the still picture and voice and sound from the microphone 18 to the portable telephone 1b. The controller 14 sets the system to a call state using a still picture (step S26).

The still picture or image may be any image which is beforehand stored in the memory 17 and which can be displayed on the display 12. For example, an image produced by the camera 15 or an image obtained via the Internet 3 from the server 4 may be used as the still picture.

In the operation at reception of a call, if the call is not issued with notification of an issuing party number or if the telephone directory table 171 does not contain the telephone number of the communicating terminal having issued the call, the controller 14 conducts the screen display and data transmission to the communicating terminal according to a default item specified as the reply method at call reception (step S27). The default item can be arbitrarily specified. For example, "image off' may be designated or a still picture beforehand set to the system may be used.

In the first embodiment of the videophone system in accordance with the present invention, it is possible to use a real video image shot by a camera of each videophone terminal as well as a substitute image such as a character. Therefore, the user can enjoy the videophone call through video communication using various video images.

During a videophone call, the image and voice and sound to be sent to the destination terminal can be automatically selected according to the communicating party. Therefore, the videophone terminal can be comfortably used to the satisfaction of the user by automatically selecting the image and voice and sound according to scenes such as a private scene and a scene in an office.

Next, description will be given of a second embodiment of a video telephone system in accordance with the present invention. The second embodiment is implemented by adding to the first embodiment a function to conduct a replay as a telephone answering machine using images and data such as a substitute image described above.

In the second embodiment, the same constituent components as those of the first embodiment are assigned with the same reference numerals, and description thereof will be avoided.

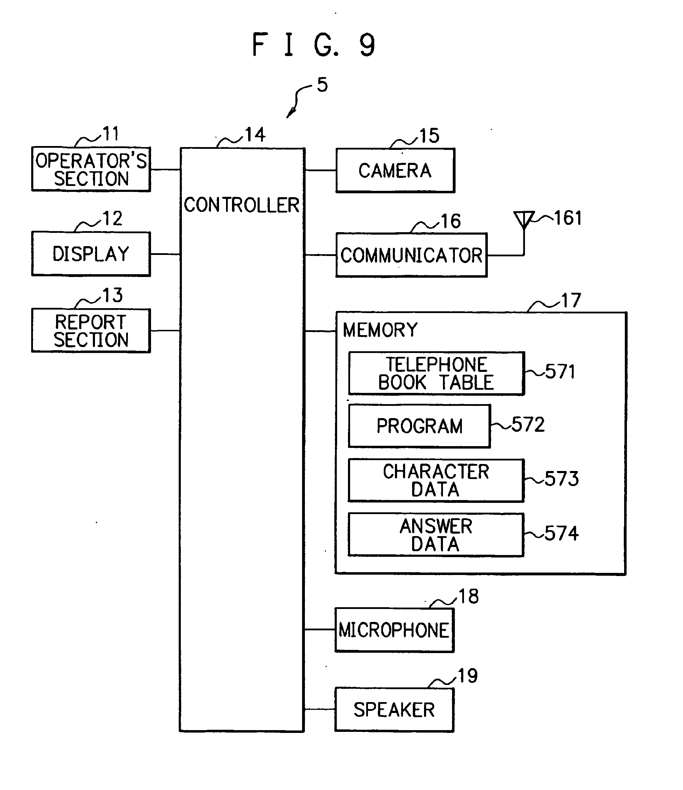

The second embodiment includes a portable telephone 5 including a memory 17 storing a telephone book table 571, a program 572, character data 573, and answer data 574 as shown in FIG. 9.

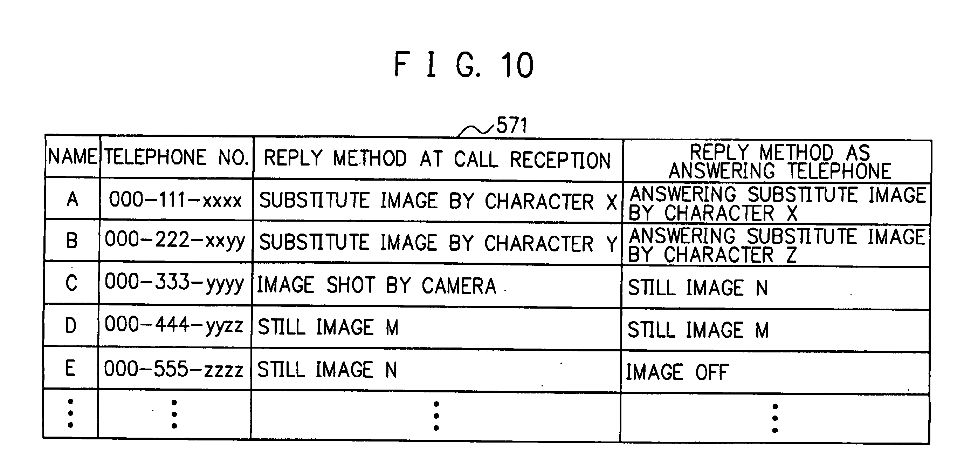

As can be seen from FIG. 10, the table 571 includes items each of which includes a telephone number, a name identifying a user of a portable telephone having the telephone number, a screen display method used to reply to a call issued from the portable telephone having the telephone number, and a reply method as a telephone answering machine or an answering telephone. The last three items are related to the telephone number in the table 571. It is also possible to relate, for example, a mail address, which is not shown, to the telephone number.

The program 572 makes the portable telephone implement various functions of the second embodiment in accordance with the present invention. The functional configuration in the memory space for the processing by the program 572 under supervision of the controller 14 is almost the same as that described in conjunction with FIG. 4. In an operation to send a reply to a call as an answering telephone, either one of the display controllers P1 to P3 executes appropriate processing according to a reply method as an answering telephone set to the telephone directory table 571.

The character data 573 is data which is used to display an image of a character or which is used for data conversion into voice and sound as in the first embodiment. Depending on items set by the user, data to be used at call reception may be the same as or other than data to be used at call reception as an answering telephone.

The answer data 574 is data of an image and voice and sound beforehand registered to the system. When the user does not reply to a call received by the portable telephone 5, the telephone 5 operates as a telephone answering machine and sends the data of an image and voice and sound as a reply to the communicating terminal.

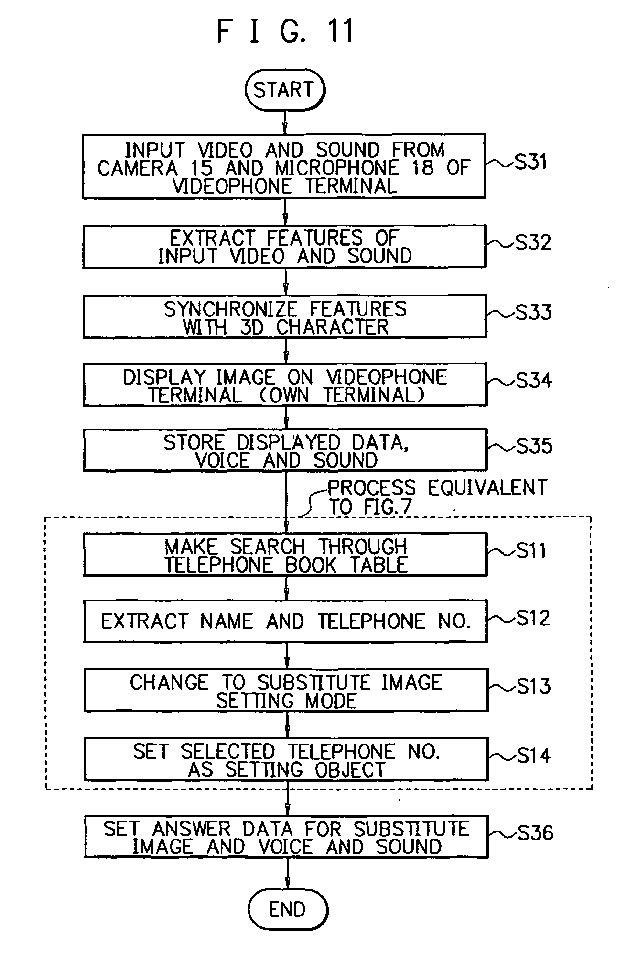

Description will now be given of operation of the second embodiment of a videophone system in accordance with the present invention. Operation to set a reply method as an answering telephone will be first described by referring to FIG. 11.

When the user sets the telephone to the registration mode to register a replay method as an answering telephone and then selects a substitute image of a character, the controller 14 inputs a video image and voice and sound from the camera 15 and the microphone 18 of the own terminal (step S31). The controller 14 then uses the substitute image display controller P3 to extract features of movement of a face and a body as well as voice and sound from the input image and voice and sound (step S32). The controller 14 thereafter executes processing to synchronize in a real-time manner the features with movement and voice of the character (step S33) and displays the obtained image on the display 12a (step s34).

The controller 14 stores in the memory 17 the data of the image and voice and sound converted into movement and voice of the character (step S35) for use in the operation to send a reply as an answering telephone.

In this fashion, it is possible to set a reply of an answering telephone according to a telephone number of the communicating terminal having issued a call to the own terminal. By linking the telephone directory table 571 with the answer data 574 such as an answering substitute image stored in the memory 17, the reply method using a display image and voice and sound can be automatically selected for each communicating terminal from which a call is received.

To automatically and selectively use the answer data 574 saved in the memory 17 for each communicating terminal having issued a call, the reply methods as an answering telephone are stored in the telephone book table 571 in association with the telephone number.

The controller 14 first makes a search through the table 571 (step S11) and then extracts a name and a telephone number to be related to the answer data 574 stored by the user in the memory 17 as above (step S12). In this state, the controller 14 sets the system to the substitute image setting mode (step S13) and then sets the telephone number extracted in step 12 as the setting object (step 14). When the user specifies a reply method as an answering telephone for the setting object, the controller 14 sets the reply method of an answering telephone to the telephone book table 571 according to the telephone number to thereby relate the reply method to the telephone number (step S36).

The operations of steps S11 to S14 are substantially the same as those of the steps with the same reference numerals shown in FIG. 7. Step S15 to set a reply method at call reception in FIG. 7 is replaced with step S36 to set a reply method as an answering telephone in FIG. 8.

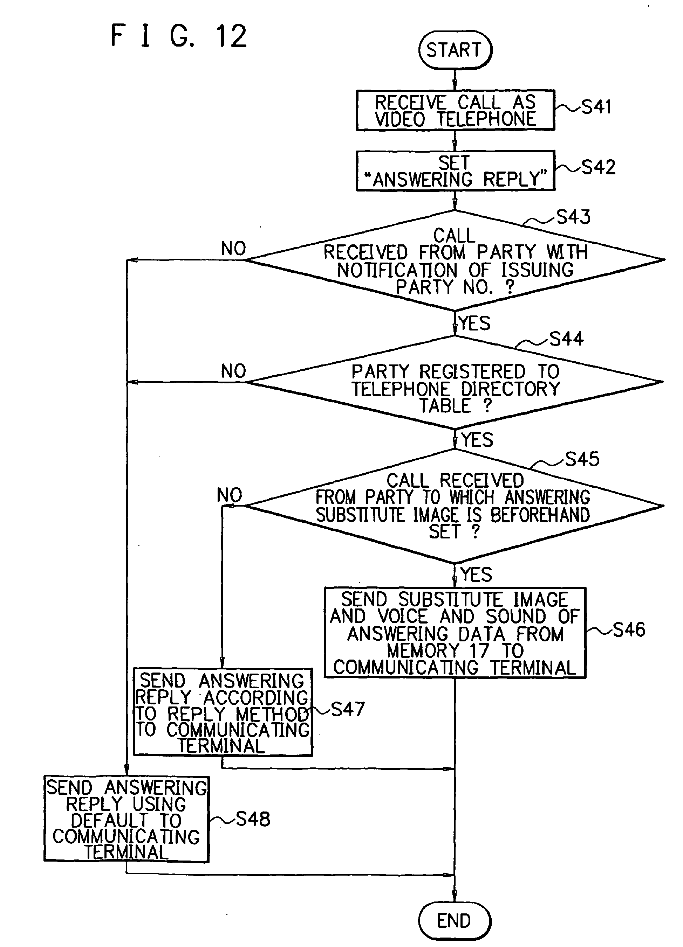

Referring next to FIG. 12, description will be given of operation in which a telephone answering operation as an answering telephone is conducted at reception of a call from a communicating terminal.

In a state in which the portable telephone 5 is beforehand set to the answering reply mode, when a call is received from a communicating terminal as a video telephone set (step S41), the control unit 14 sets the system to a state to reply as an answering telephone (step S42). If the call is received from a communicating party with notification of an issuing party (step S43), the controller 14 makes a search through the telephone directory table 571 using a telephone number notified as above (step S44). If the call is received from a communicating party with a telephone number for which an answering substitute image is set for the reply method of an answering telephone (step S45), the controller 14 sends an answering reply image and voice and sound of answering data 574 from the memory 17 to the communicating terminal. The terminal then displays the image and produces voice and sound according to the data (step S46).

When the reply method as an answering telephone set for the telephone number retrieved in step S44 indicates a still picture, the answering data 574 stored in the memory 17 includes a still picture and voice and sound. The control unit 14 sends the image and voice and sound of answering data 574 to the communicating terminal. The terminal displays the image and produces voice and sound using the data (step S47).

When the reply method of an answering telephone set for the telephone number retrieved in step S44 indicates "image off", the answering data 574 in the memory 17 includes only voice and sound. The controller 14 sends the voice and sound of answering data 574 to the communicating terminal. The terminal displays the image and produces voice and sound according to the data (step S47).

In the operation at call reception, if the call does not include notification of an issuing party number or if the telephone book table 571 does not contain a telephone number of the communicating party having issued the call, the controller 14 uses a default item for the reply method at call reception to display a screen image and to transmit data to the communication terminal (step S48). The default item can be arbitrarily specified. For example, "image off' may be designated or a still picture beforehand set to the system may be used.

In the second embodiment of the videophone system in accordance with the present invention, there is obtained an advantage in addition to that attained by the first embodiment as follows. Also when the system operates as an answering telephone, a video image and a still picture produced by a camera as well as a substitute image of a character can be used. For each communicating party, one of these images can be automatically selected for the reply. Therefore, the user can comfortably use the videophone terminal with various video images according to scenes such as a private scene and a scene in an office.

The embodiments of the present invention have been described by way of illustration and naturally can be modified in various ways within the scope and spirit of the present invention.

For example, the configuration of the telephone directory table stored in the memory may be changed. If it is possible that the telephone number is linked with an object implementing an event set such as the reply method at call reception so that the object is accessed from the telephone number, the present invention is not restricted by the configurations of the table described in conjunction with FIGS. 3 and 10. In such a situation, the items set to the table may be represented by an identifier and a flag.

In the description, the portable telephone set accesses the server via the Internet. However, any communicable network such as a local area network (LAN) or a wide area network (WAN) can also be used.

Although the videophone terminal is applied to a portable telephone in accordance with the present invention in the description, this does not restrict the present invention. The present invention is applicable to any videophone terminal including a video telephone function which is capable of implementing a system to conduct communication of videophone type. For example, the present invention can be applied to a terminal of the Internet (IP) telephone using the Internet as a communication line and to a videophone system using the terminal.

In accordance with the present invention, when a call is received by a terminal as a video telephone set, an image and voice and sound to be transmitted to the communicating terminal during the call can be automatically selected according to the party as the source of the call. The user can enjoy video communication using various video images according to scenes such as a private scene and a scene in an office.

Even in a reply operation to send a reply to a call as an answering telephone, the reply method can be automatically selected according to the communicating party having issued the call.

While the present invention has been described with reference to the particular illustrative embodiments, it is not to be restricted by those embodiments but only by the appended claims.

## Claims

1. A videophone terminal (1) for conducting a call with a communicating terminal by communicating voice and sound and an image, comprising:
imaging means (15) for shooting an image;
a microphone (18) for converting voice and sound into an electric signal;
display means (12) for displaying a screen image;
a communicating means (16) for communicating a call;
storage means (17) for beforehand storing a telephone book table (171) including a telephone number of said communicating terminal and a reply method at call reception with a relationship established therebetween; and
control means (14) adapted for converting an image to be displayed on said communicating terminal into data to be sent to said communicating terminal at reception of a call from said communicating terminal according to the reply method related to a telephone number of said communicating terminal in the telephone book table (171) stored in the storage means (17), **characterized in that** said control means is further adapted for controlling a reply using a respectively selected one of a camera image display controller (P1), a still image display controller (P2), or a substitute image display controller (P3), selected by said control means (14) in accordance with said relationship, thereby to determine the display data sent to said communicating terminal respectively as a camera image, a still image or a substitute image, in dependence upon said relationship.

2. A videophone terminal in accordance with claim 1,
wherein:
the telephone book table (171) relates a telephone number of a communicating terminal to a reply method to send a reply as an answering telephone; and
the control means (14) is adapted to make at reception of a call, when an answering reply mode to send a reply as an answering telephone is set in advance, a search through the telephone book table and to transmit, when the telephone number of the communicating terminal of the call is related to a reply method as an answering telephone, an image and voice and sound to the communicating terminal according to the reply method.

3. A videophone terminal in accordance with claim 1 or 2, wherein:
the reply method includes a reply using a substitute image expressing a feature of a movement in an image shot by the imaging means by a movement of a character beforehand set; and
the control means (14) includes a substitute image display control section adapted for converting the image shot by the imaging means (15) into the substitute image.

4. A videophone terminal in accordance with claim 3, wherein:
the reply using the substitute image includes a reply using voice and sound corresponding to the substitute image; and
the substitute image display control section is adapted to convert voice and sound from the microphone into voice and sound corresponding to the substitute image.

5. A videophone terminal in accordance with claim 3,
wherein:
the communicating means (16) includes a function to establish connection to a network (3); and
data is obtained for the character via the network from the communicating means and is stored in the storage means.

6. A videophone terminal in accordance with one of claims 1, 2, 4 and 5, wherein:
the reply method includes a reply using an image shot by the imaging means and a reply using a still picture;
the control means (14) includes:
camera image display control section adapted for displaying the image shot by the imaging means; and
a still picture display control section adapted for displaying a still picture using an image stored in the storage means.

7. A videophone terminal in accordance with claim 3, wherein:
the reply method includes a reply using an image shot by the imaging means (15) and a reply using a still picture;
the control means (14) includes:
camera image display control section adapted for displaying the image shot by the imaging means; and
a still picture display control section adapted for displaying a still picture using an image stored in the storage means.

8. A screen display setting method for use with a videophone terminal (1) for conducting a call with a communicating terminal by communicating voice and sound and an image including imaging means (15) for shooting an image, a microphone (18) for converting voice and sound into an electric signal, display means (12) for displaying a screen image, and a communicating means (16) for communicating a call, the method comprising:
a reply setting step of relating in a telephone book table (171) a telephone number of a communicating terminal to a reply method at reception of a call according to an input from an input means (11); and
a reply step for converting an image to be displayed on the communication terminal into data to be sent to the communicating terminal at reception of a call from a communicating terminal according to the reply method related to a telephone number of the communicating terminal in the telephone book table (171), **characterized in that** said reply step controls a reply using a respectively selected one of a camera image display controller (P1), a still image display controller (P2), or a substitute image display controller (P3), selected by said reply step in accordance with said relationship, thereby to determine the display data sent to said communicating terminal respectively as a camera image, a still image or a substitute image, in dependence upon said relationship.

9. A screen display setting method according to claim 8, further comprising:
an answering reply setting step of relating in a telephone book table (171) a telephone number of a communicating terminal to a reply method of sending a reply as an answering telephone to the communicating terminal according to an input from said input means (11); and
an answering reply step of conducting control, at reception of a call from a communicating terminal in a state in which the videophone terminal is beforehand set to reply as an answering telephone, to convert an image and voice and sound to be sent from the videophone terminal to the communicating terminal into data according to a reply method as an answering telephone related to a telephone number of the communicating terminal in the telephone book table.

10. A screen display setting method according to claim 8 or 9, wherein the reply method includes a reply using a substitute image expressing a feature of a movement in an image shot by the imaging means by a movement of a character beforehand set.

11. A screen display setting method according to claim 10, wherein the reply using the substitute image includes a reply using voice and sound corresponding to the substitute image.

12. A screen display setting method according to claim 10, wherein the communicating means includes a function to establish connection to a network (3), the method further comprising a character obtaining step of obtaining data for the character via the network from the communicating means and storing the data in storage means,
the character obtaining step being disposed before the reply setting step and the answering reply setting step.

13. A videophone system including a plurality of videophone terminals according to one of claims 1 to 7.

14. A screen display setting method in accordance to one of claims 8 to 12 for use with a videophone system including a plurality of videophone terminals said method being conducted in one videophone terminal selected from the videophone terminals.

## Patentansprüche

1. Videophonanschluss (1) zum Durchführen eines Anrufs mit einem Kommunikationsanschluss durch Kommunikation von Stimme und Ton und eines Bildes mit:
einer Bildaufnahmeeinrichtung (15) zur Aufnahme eines Bildes,
einem Mikrophon (18) zum Wandeln von Stimme und Ton in ein elektrisches Signal,
einer Anzeigeeinrichtung (12) zum Anzeigen eines Schirmbildes,
einer Kommunikationseinrichtung (16) zum Kommunizieren eines Anrufs,
einer Speichereinrichtung (17) zum vorhergehenden Speichern einer Telefonbuchtabelle (171) einschließlich einer Telefonnummer des Kommunikationsanschlusses und eines Erwiderungsverfahrens bei Rufannahme mit einer Beziehung, die zwischen ihnen hergestellt ist, und
einer Steuereinrichtung (14), die ausgebildet ist zur Wandlung eines auf den Kommunikationsanschluss anzuzeigenden Bildes in Daten, die zu dem Kommunikationsanschluss bei Empfang eines Anrufs von dem Kommunikationsanschluss entsprechend dem Erwiderungsverfahren, das sich auf eine Telefonnummer des Kommunikationsanschlusses in der Telefonbuchtabelle (171), die in der Speichereinrichtung (17) gespeichert ist, bezieht, **dadurch gekennzeichnet, dass** die Steuereinrichtung ferner ausgebildet ist zum Steuern einer Erwiderung unter Verwendung eines jeweils ausgewählten einen eines Kamerabildanzeigecontrollers (P1), eines Standbildanzeigecontrollers (P2) oder eines Substitutbildanzeigecontrollers (P3), der durch die Steuereinrichtung (14) in Übereinstimmung mit der Beziehung ausgewählt wird, wodurch die Anzeigedaten in Abhängigkeit von der Beziehung jeweils als ein Kamerabild, ein Standbild oder ein Substitutbild an den Kommunikationsanschluss gesendet werden.

2. Videophonanschluss nach Anspruch 1, wobei:
die Telefonbuchtabelle (171) sich auf eine Telefonnummer eines Kommunikationsanschlusses für ein Erwiderungsverfahren bezieht, um eine Erwiderung als eine Telefonantwort zu senden, und
die Steuereinrichtung (14) ausgebildet ist, bei Empfang eines Anrufs, wenn ein Antworterwiderungsmodus zum Senden einer Erwiderung als eine Telefonantwort im Voraus eingestellt wurde, eine Suche durch die Telefonbuchtabelle durchzuführen und zur Übermittlung, wenn die Telefonnummer des Kommunikationsanschlusses des Anrufs sich auf ein Erwiderungsverfahren als Telefonantwort bezieht, eines Bildes und von Stimme und Ton an den Kommunikationsanschluss entsprechend dem Erwiderungsverfahren.

3. Videophonanschluss nach Anspruch 1 oder 2, wobei:
das Erwiderungsverfahren eine Erwiderung unter Verwendung eines Substitutbildes umfasst, das ein Merkmal einer Bewegung eines Bildes, das durch die Bildaufnahmeeinrichtung erzeugt wurde, durch ein Merkmal ausdrückt, das vorher eingestellt wurde, und
die Steuereinrichtung (14) einen Sustitutbildanzeigesteuerabschnitt aufweist, der ausgebildet ist, um das Bild, das durch die Bildaufnahmeeinrichtung (15) aufgenommen wurde, in das Sustitutbild zu wandeln.

4. Telefonanschluss nach Anspruch 3, wobei:
die Erwiderung unter Verwendung des Substitutbildes eine Erwiderung unter Verwendung von Stimme und Ton umfasst, die dem Substitutbild entsprechen, und
der Substitutbildanzeigesteuerabschnitt ausgebildet ist, Stimme und Ton von dem Mikrophon in Stimme und Ton entsprechend dem Substitutbild zu wandeln.

5. Videophonanschluss nach Anspruch 3, wobei:
die Kommunikationseinrichtung (16) eine Funktion zum Aufbau einer Verbindung zu einem Netzwerk (3) umfasst und
Daten für das Kennzeichnen über das Netzwerk von der Kommunikationseinrichtung erhalten werden und in der Speichereinrichtung gespeichert werden.

6. Videophonanschluss nach einem der Ansprüche 1, 2, 4 und 5, wobei:
das Erwiderungsverfahren eine Erwiderung unter Verwendung eines Bildes umfasst, das durch die Bildaufnahmeeinrichtung aufgenommen wurde, und eine Erwiderung unter Verwendung eines Standbildes,
wobei die Steuereinrichtung (14) aufweist:
einen Kamerabildanzeigesteuerabschnitt, der ausgebildet ist, um das Bild, das durch die Bildaufnahmeeinrichtung aufgenommen wurde, anzuzeigen, und
einen Standbildanzeigesteuerabschnitt, der zur Anzeige eines Standbildes unter Verwendung eines in der Speichereinrichtung gespeicherten Bildes ausgebildet ist.

7. Videophonanschluss nach Anspruch 3, wobei:
das Erwiderungsverfahren eine Erwiderung unter Verwendung eines Bildes umfasst, das durch die Bildaufnahmeeinrichtung (15) aufgenommen wurde, und eine Erwiderung unter Verwendung eines Standbildes,
wobei die Steuereinrichtung (14) aufweist:
einen Kamerabildanzeigesteuerabschnitt, der zur Anzeige des Bildes, das durch die Bildaufnahmeeinrichtung aufgenommen wurde, ausgebildet ist, und
einen Standbildanzeigesteuerabschnitt, der zur Anzeige eines Standbildes unter Verwendung eines Bildes, das in der Steuereinrichtung gespeichert ist, ausgebildet ist.

8. Schirmanzeigeeinstellverfahren zur Verwendung mit einem Videophonanschluss (1) zur Durchführung eines Anrufs mit einem Kommunikationsanschluss durch Kommunikation von Stimme und Ton und einem Bild, mit einer Bildaufnahmeeinrichtung (15) zur Aufnahme eines Bildes, einem Mikrophon (18) zum Wandeln von Stimme und Ton in ein elektrisches Signal, einer Anzeigeeinrichtung (12) zum Anzeigen eines Schirmbildes und einer Kommunikationseinrichtung (16) zum Kommunizieren eines Anrufs, wobei das Verfahren aufweist:
einen Erwiderungseinstellschritt zum in Bezug setzen einer Telefonbuchtabelle (171) einer Telefonnummer eines Kommunikationsanschlusses durch ein Erwiderungsverfahren bei Empfang eines Anrufs entsprechend einer Eingabe von einer Eingabeeinrichtung (11) und
einen Erwiderungsschritt zum Wandeln eines Bildes, das auf dem Kommunikationsanschluss anzuzeigen ist, in Daten, die an den Kommunikationsanschluss bei Empfang eines Anrufes von dem Kommunikationsanschluss entsprechend dem Erwiderungsverfahren in Bezug auf eine Telefonnummer des Kommunikationsanschlusses in der Telefonbuchtabelle (171) zu senden sind, **dadurch gekennzeichnet, dass** der Erwiderungsschritt eine Erwiderung unter Verwendung eines jeweiligen ausgewählten einen eines Kamerabildanzeigecontrollers (P1), eines Standbildanzeigecontrollers (P2) oder eines Substitutbildanzeigecontrollers (P3) steuert, der durch den Erwiderungsschritt in Übereinstimmung mit der Beziehung ausgewählt wird, um dadurch die Anzeigedaten, die an den Kommunikationsanschluss zu senden sind, jeweils als ein Kamerabild, ein Standbild oder ein Sustitutbild in Übereinstimmung mit der Beziehung zu verwenden.

9. Schirmanzeigeeinstellverfahren nach Anspruch 8, mit ferner:
einem Antworterwiderungseinstellschritt zum in Bezug setzen einer Telefonbuchtabelle (171) einer Telefonnummer eines Kommunikationsanschlusses zu einem Erwiderungsverfahren des Sendens einer Erwiderung als eine Telefonantwort an den Kommunikationsanschluss entsprechend einer Eingabe von der Eingabeeinrichtung (11) und
einen Antworterwiderungsschritt zur Durchführung einer Steuerung bei Empfang eines Anrufs von einem Kommunikationsanschluss in einem Zustand, in dem der Videophonanschluss vorher auf eine Erwiderung als eine Telefonantwort eingestellt wurde, um ein Bild und Stimme und Ton, die von dem Videophonanschluss an den Kommunikationsanschluss zu senden sind, in Daten entsprechend eines Erwiderungsverfahrens als eine Telefonantwort zu wandeln, die sich auf eine Telefonnummer des Kommunikationsanschlusses in der Telefonbuchtabelle bezieht.

10. Schirmanzeigeeinstellverfahren nach Anspruch 8 oder 9, wobei das Erwiderungsverfahren eine Erwiderung unter Verwendung eines Substitutbildes umfasst, das ein Merkmal einer Bewegung eines Bildes ausdrückt, das durch die Bildaufnahmeeinrichtung aufgenommen wurde, durch eine Bewegung eines Merkmals, das vorher eingestellt wurde.

11. Schirmanzeigeeinstellverfahren nach Anspruch 10, wobei die Erwiderung unter Verwendung des Substitutbildes eine Erwiderung unter Verwendung von Stimme und Ton umfasst, die dem Substitutbild entsprechen.

12. Bildanzeigeeinstellverfahren nach Anspruch 10, wobei die Kommunikationseinrichtung eine Funktion zum Herstellen einer Verbindung mit einem Netzwerk (3) umfasst, wobei das Verfahren ferner einen Kennzeichnungsmittlungsschritt aufweist zum Erhalten von Daten für das Kennzeichnen über das Netzwerk von der Kommunikationseinrichtung (16) und zum Speichern der Daten in der Speichereinrichtung (17),
wobei der Kennzeichenermittlungsschritt vor dem Erwiderungseinstellschritt und dem Antworterwiderungseinstellschritt angeordnet ist.

13. Videophonsystem mit einer Anzahl von Videoanschlüssen nach einem der Ansprüche 1 bis 7.

14. Schirmanzeigeeinstellverfahren nach einem der Ansprüche 8 bis 12 zur Verwendung mit einem Videophonsystem einschließlich einer Anzahl von Videophonanschlüssen, wobei das Verfahren in einem Videophonanschluss ausgeführt wird, der aus den Videophonanschlüssen ausgewählt ist.

## Revendications

1. Terminal de visiophonie (1) pour conduire un appel avec un terminal de communication par communication de parole et de son et d'une image, comprenant :
des moyens d'imagerie (15) pour acquérir une image ;
un microphone (18) pour convertir la parole et le son en signal électrique ;
des moyens d'affichage (12) pour afficher une image d'écran ;
des moyens de communication (16) pour communiquer un appel ;
des moyens de stockage (17) pour stocker préalablement une table d'annuaire téléphonique (171) comprenant un numéro de téléphone dudit terminal de communication et un procédé de réponse à la réception d'un appel avec une relation établie entre ceux-ci ; et
des moyens de commande (14) adaptés pour convertir une image à afficher sur ledit terminal de communication en données à envoyer au terminal de communication à la réception d'un appel depuis un terminal de communication en fonction du procédé de réponse associé à un numéro de téléphone du terminal de communication dans la table d'annuaire téléphonique (171) stockée dans les moyens de stockage (17), **caractérisé en ce que** lesdits moyens de commande sont en outre adaptés pour commander une réponse en utilisant, l'un respectivement sélectionné, parmi un dispositif de commande d'affichage d'image de caméra (P1), un dispositif de commande d'affichage d'image fixe (P2), ou un dispositif de commande d'affichage d'image de substitution (P3), sélectionné par lesdits moyens de commande (14) conformément à ladite relation, de manière à déterminer les données d'affichage envoyées audit terminal de communication respectivement sous la forme d'une image de caméra, une image fixe ou une image de substitution, en fonction de ladite relation.

2. Terminal de visiophonie selon la revendication 1 dans lequel :
la table d'annuaire téléphonique (171) relie un numéro de téléphone d'un terminal de communication à un procédé de réponse pour envoyer une réponse en tant que téléphone répondeur ; et
les moyens de commande (14) sont adaptés pour effectuer une réception d'un appel, lorsqu'un mode de réponse de répondeur pour envoyer une réponse en tant que téléphone répondeur est défini à l'avance, une recherche dans la table d'annuaire téléphonique et pour transmettre, lorsque le numéro de téléphone du terminal de communication de l'appel est associé à un procédé de réponse en tant que téléphone répondeur, une image et de la parole et du son au terminal de communication conformément au procédé de réponse.

3. Terminal de visiophonie selon la revendication 1 ou 2, dans lequel :
le procédé de réponse comprend une réponse en utilisant une image de substitution exprimant une caractéristique d'un mouvement dans une image acquise par les moyens d'imagerie par un mouvement d'un caractère préalablement défini ; et
les moyens de commande (14) comprennent une section de commande d'affichage d'image de substitution adaptée pour convertir l'image acquise par les moyens d'imagerie (15) en image de substitution.

4. Terminal de visiophonie selon la revendication 3, dans lequel :
la réponse utilisant l'image de substitution comprend une réponse utilisant la parole et le son correspondant à l'image de substitution ; et
la section de commande d'affichage d'image de substitution est adaptée pour convertir la parole et le son provenant du microphone en parole et en son correspondant à l'image de substitution.

5. Terminal de visiophonie selon la revendication 3, dans lequel :
les moyens de communication (16) comprennent une fonction pour établir une connexion à un réseau (3) ; et
des données sont obtenues pour le caractère via le réseau depuis les moyens de communication et sont stockées dans les moyens de stockage.

6. Terminal de visiophonie selon une des revendications 1, 2, 4 et 5, dans lequel :
le procédé de réponse comprend une réponse utilisant une image acquise par les moyens d'imagerie et une réponse utilisant une image fixe ;
les moyens de commande (14) comprennent :
une section de commande d'affichage d'image de caméra adaptée pour afficher l'image acquise par les moyens d'imagerie ; et
une section de commande d'affichage d'image fixe adaptée pour afficher une image fixe en utilisant une image stockée dans les moyens de stockage.

7. Terminal de visiophonie selon la revendication 3, dans lequel :
le procédé de réponse comprend une réponse utilisant une image acquise par les moyens d'imagerie (15) et une réponse en utilisant une image fixe ;
les moyens de commande (14) comprennent :
une section de commande d'affichage d'image de caméra adaptée pour afficher l'image acquise par les moyens d'imagerie ; et
une section de commande d'affichage d'image fixe adaptée pour afficher une image fixe en utilisant une image stockée dans les moyens de stockage.

8. Procédé de définition d'affichage d'écran pour utilisation avec un terminal de visiophonie (1) pour conduire un appel avec un terminal de communication par communication de parole et de son et d'une image comprenant des moyens d'imagerie (15) pour acquérir une image, un microphone (18) pour convertir la parole et le son en signal électrique, des moyens d'affichage (12) pour afficher un image d'écran, et des moyens de communication (16) pour communiquer un appel, le procédé comprenant :
une étape de définition de réponse d'association dans une table d'annuaire téléphonique (171) d'un numéro de téléphone d'un terminal de communication à un procédé de réponse à la réception d'un appel en fonction d'une entrée de moyens d'entrée (11) ; et
une étape de réponse pour convertir une image à afficher sur le terminal de communication en données à envoyer au terminal de communication à la réception d'un appel d'un terminal de communication conformément au procédé de réponse associé à un numéro de téléphone du terminal de communication dans la table d'annuaire de téléphone (171), **caractérisé en ce que** ladite étape de réponse contrôle une réponse en utilisant, l'un respectivement sélectionné, parmi un dispositif de commande d'affichage d'image de caméra (P1), un dispositif de commande d'affichage d'image fixe (P2), ou un dispositif de commande d'affichage d'image de substitution (P3), sélectionné par ladite étape de réponse conformément à ladite relation, de manière à déterminer les données d'affichage envoyées audit terminal de communication respectivement sous la forme d'une image de caméra, une image fixe ou une image de substitution, conformément à ladite relation.

9. Procédé de définition d'affichage d'écran selon la revendication 8, comprenant en outre :
une étape de définition de réponse de répondeur d'association dans une table d'annuaire téléphonique (171) d'un numéro de téléphone d'un terminal de communication à un procédé de réponse d'envoi d'une réponse en tant que téléphone répondeur au terminal de communication en fonction d'une entrée desdits moyens d'entrée (11) ; et
une étape de réponse de répondeur de conduite d'une commande, à la réception d'un appel d'un terminal de communication dans un état dans lequel le terminal de visiophonie est préalablement défini pour répondre en tant que téléphone répondeur, pour convertir une image et la parole et le son à envoyer depuis le terminal de visiophonie au terminal de communication en données en fonction d'un procédé de réponse en tant que téléphone répondeur associé à un numéro de téléphone du terminal de communication dans la table d'annuaire de téléphone.

10. Procédé de définition d'affichage d'écran selon la revendication 8 ou 9, le procédé de réponse comprenant une réponse utilisant une image de substitution exprimant une caractéristique d'un mouvement dans une image acquise par les moyens d'imagerie par un mouvement d'un caractère préalablement défini.

11. Procédé de définition d'affichage d'écran selon la revendication 10, dans lequel la réponse utilisant l'image de substitution comprend une réponse utilisant la parole et le son correspondant à l'image de substitution.

12. Procédé de définition d'affichage d'écran selon la revendication 10, dans lequel les moyens de communication comprennent une fonction pour établir la connexion à un réseau (3), le procédé comprenant en outre une étape d'obtention de caractère d'obtention de données pour le caractère via le réseau à partir des moyens de communication (16) et le stockage de données dans les moyens de stockage (17),
l'étape d'obtention de caractère étant disposée avant l'étape de définition de réponse et l'étape de définition de réponse de répondeur.

13. Système de visiophonie comprenant une pluralité de terminaux de visiophonie selon une des revendications 1 à 7.

14. Procédé de définition d'affichage d'écran selon une des revendications 8 à 12 pour utilisation avec un système de visiophonie comprenant une pluralité de terminaux de visiophonie, ledit procédé étant conduit dans un terminal de visiophonie choisi parmi les terminaux de visiophonie.
